# EUROPEAN PATENT APPLICATION

(11) **EP 4 847 762 A1**
(43) Date of publication of application: **02.12.2026**
(21) Application number: 25382538.4
(22) Date of filing: 28.05.2025
(51) Int. Cl.: F02D 41/14, F02D 41/18, G01M 15/10

(54) **ENGINE EXHAUST GAS POLLUTANT MEASUREMENT SYSTEM AND METHOD**

(71) Applicant: Horse Powertrain Solutions, S.L.U., 28108 Alcobendas (Madrid) (ES)
(72) Inventor: AVECILLA-SANZ, Pablo, 47008 Valladolid (ES)
(74) Representative: Elzaburu S.L.P.

(57) **Abstract**

Engine exhaust gas pollutant measurement system and method. The engine (1) in fluidic communication with an air intake and with an exhaust gas circuits and with an electronic control unit (ECU) for controlling the airflow intake and the fuel flow provided to the engine (1). The measurement system comprising:
- a processing unit,
- first means providing the processing unit with the air flow at the air intake circuit,
- second means providing the processing unit with the fuel flow. The processing unit receiving the provided intake air flow from the first means and the provided fuel flow from the second means and calculating an exhaust gas flow,
- third means providing the processing unit with the concentration of pollutants in the exhaust gas circuit, the processing unit further calculating the mass flow of pollutants from the calculated exhaust gas flow and the concentration of pollutants.

## Description

### FIELD OF THE INVENTION

The present invention relates to the field of measurement of pollutants in internal combustion engine exhaust flow, both on a test bench and on the open road.

### BACKGROUND OF THE INVENTION

The decreasing emission level requirements for internal combustion engines together with the increasing hybridization of vehicle engines have made some modal exhaust flow meters, such as CO₂ tracers, obsolete.

As part of the tuning development activities carried out on a roller test bench, some tracers are accurate in stationary phases, i.e., when the engine speed and torque are almost constant, nevertheless they are not accurate enough when the internal combustion engine (ICE) is started. This is due to the fact that when the exhaust gas flow is measured with a flow meter on the bench in the exhaust pipe, i.e., at the end of the exhaust line, with a CO₂ tracer flow meter, when the engine is started, the value does not correspond to the actual exhaust gas flow emitted by the engine, because during the engine shutdown period before the engine is started again, the exhaust line is 'polluted' with some fresh air from the environment.

The problem is more critical in hybrid vehicles that have an internal combustion engine plus at least one electric motor, because the internal combustion engine is often switched off many times during a trip.

In addition, the amount of humidity in the exhaust pipe is high, so any measurement must take this humidity into account.

To solve this problem, it would be possible to install a compact direct vehicle exhaust flow measurement device (DVE) in the exhaust gas circuit, but this would mean adding and installing an additional device.

Therefore, there is a need to solve the above mentioned technical problem without having to provide or replace an exhaust flow measurement device.

### SUMMARY OF THE INVENTION

As indicated above, increasingly restrictive emission regulations and verifications create the need for an accurate measurement of exhaust gas flow in vehicles which can also be used advantageously on a test bench, and which avoids the need to add additional measurement devices.

As is known from the prior art, an internal combustion engine is in fluidic communication with an air intake circuit and with an exhaust gas circuit. It is also in electric/electronic communication with an electronic control unit (ECU) for acquiring some engine parameters from different sensors such as pressure and temperature sensors, oxygen sensors, etc., and for controlling the air flow and the fuel flow provided to the engine, among others, thanks to some actuators such as air intake valves, fuel intake valves, etc, based on the values of said engine parameters.

The engine exhaust gas pollutant measurement system object of the invention comprises:
- a processing unit,
- first means configured to provide the processing unit with the air flow at the air intake circuit, i.e., it provides the processing unit with the amount of air flow at the intake circuit,
- second means configured to provide the processing unit with the fuel flow injected into the engine, for instance in mg/stroke. The processing unit is configured to receive the intake air flow provided from the first means and the fuel flow provided from the second means. The processing unit is configured to calculate an exhaust gas flow from said provided intake air flow and said provided fuel flow,
- third means configured to provide the processing unit with the concentration of pollutants in the exhaust gas circuit. The processing unit is further configured to calculate the mass flow of pollutants from the calculated exhaust gas flow and the provided concentration of pollutants.

In an embodiment, the air flow at the air intake circuit, or intake air flow, can be obtained by the data provided by an air intake flow meter to the electronic control unit (ECU).

Alternatively, the air intake flow can be calculated by the electronic control unit (ECU) using a filling model applied to the air flow entering the engine based at least on the pressure and temperature in the engine intake manifold, and on the engine speed.

In an embodiment, the fuel flow may be calculated by the electronic control unit (ECU) based on the air flow, the richness value measured by an oxygen sensor and fuel specifications comprising the Oxygen/Carbon ratio (OCCAR) and the Hydrogen/Carbon ratio (HCCAR) in the fuel.

Alternatively, the fuel flow can be calculated by the electronic control unit (ECU) based on the injection opening duration of the fuel injectors, and the pressure upstream and downstream the injectors.

According to the above, the claimed invention uses the intake air flow determined at the air intake circuit where the amount of humidity is very low compared with any kind of measurement performed in the exhaust gas circuit so there is no need to take into account the humidity in the calculation of the exhaust gas flow.

The claimed invention also avoids the need to install a compact direct vehicle exhaust flow measurement device (DVE) as it makes use of the already existing vehicle information instead.

It is also an object of the invention an engine exhaust gas pollutant measurement method comprising the following steps:
- providing a processing unit with the air flow at the intake circuit by a first means,
- providing the processing unit with the fuel flow injected into the engine by a second means,
- calculating in the processing unit the exhaust gas flow from said provided intake air flow and said provided fuel flow,
- providing the processing unit with the concentration of pollutants in the exhaust gas circuit by a third means,
- the processing unit being further configured to calculate the mass flow of pollutants from the calculated exhaust gas flow and the provided concentration of pollutants.

The claimed invention can be used in combination with bench equipment measurement devices, as modal lambda measuring devices, or using only the measurements provided by the vehicle, integrated in the analysis data or even in test bench software. Thus, it provides integration of more dynamism and accuracy in the exhaust flow signal for hybrid vehicles in the start phases of Internal Combustion Engines (ICE) without the need to upgrade test benches or vehicles.

### DESCRIPTION OF THE FIGURES

To complete the description and to provide for a better understanding of the invention, drawings are provided. Said drawings form an integral part of the description and illustrate preferred embodiments of the invention. The drawings comprise the following figures.
Figure 1 is a graphic showing a comparison between the measurement of a CO₂ tracer and the real measurement.
Figure 2 shows an example of an internal combustion engine with its intake and exhaust circuits that is suitable for the application of the claimed method.

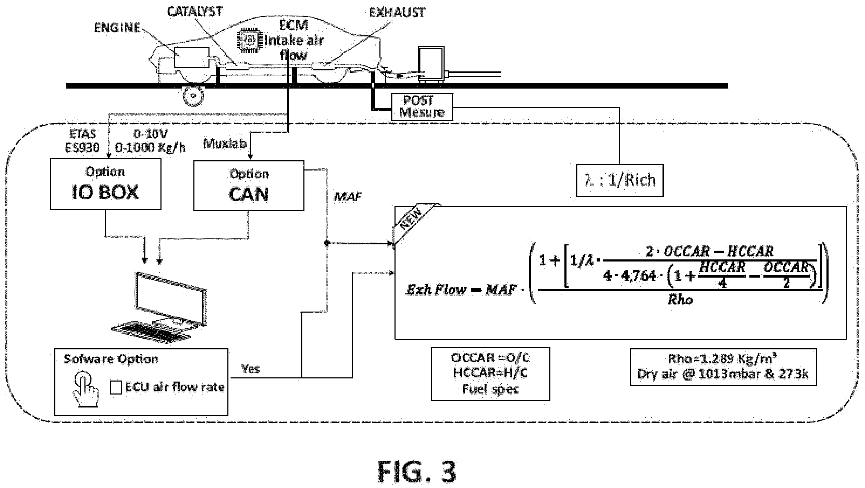

Figure 3 shows a schematic representation of an integration of the claimed invention into a test bench.

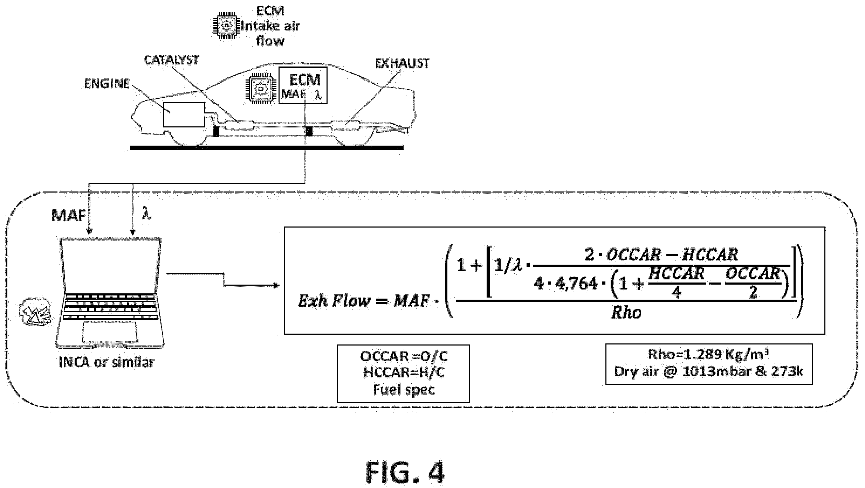

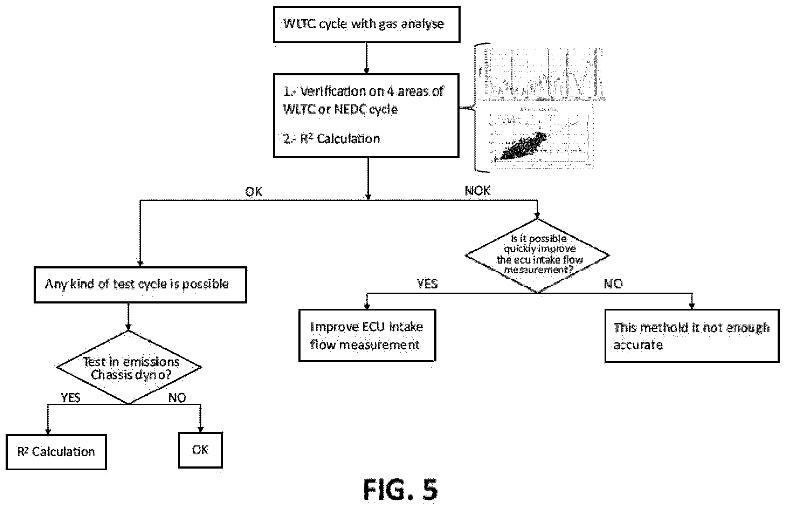

Figure 4 shows a schematic representation of an integration of the claimed invention into an open road testing.

### DETAILED DESCRIPTION OF THE INVENTION

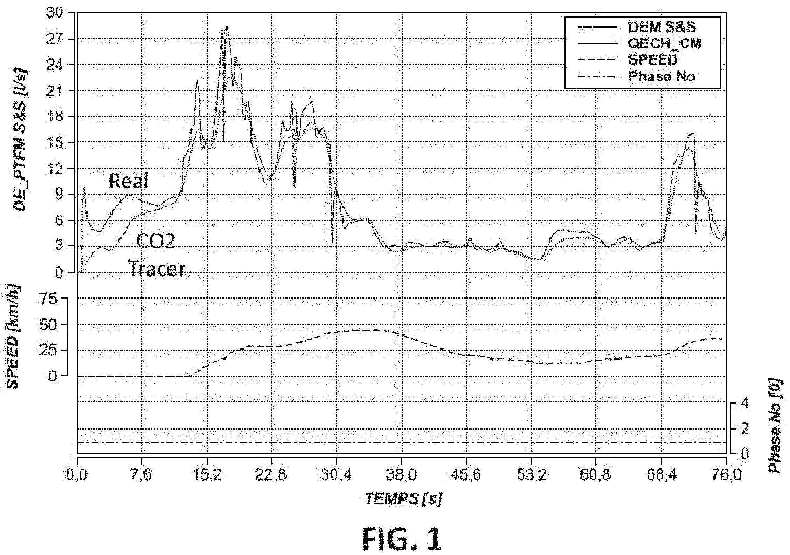

Figure 1 is a graph showing a comparison between the measurement of a CO₂ tracer and the actual measurement. Although the CO₂ tracer is accurate in steady phases, it is not accurate when starting the Internal Combustion Engine (ICE) as can be seen in figure 1.

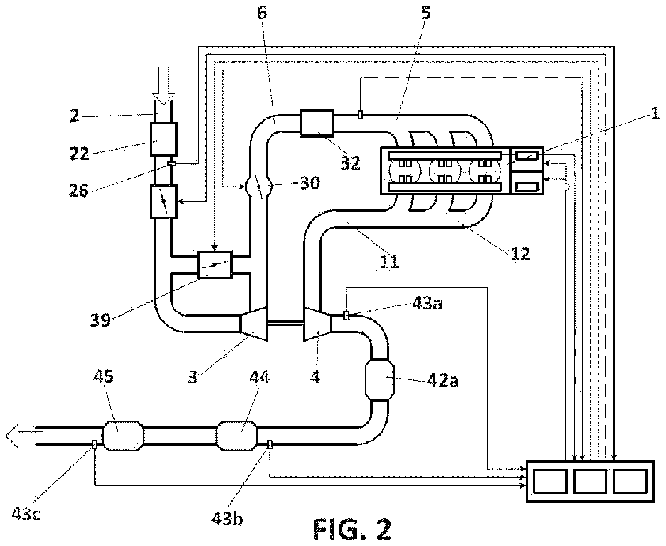

Figure 2 discloses a schematic view of a turbo engine architecture known in the state of the art. In the shown embodiment, the engine (1) is a three-cylinder engine, which is associated with an air intake circuit and with an exhaust gas circuit. The internal combustion engine structure involving a turbocharger comprising a compressor (3) and a turbine (4).

In the shown embodiment, the air intake circuit comprises an air inlet (2), an air filter (22), a conduit for conveying air to the compressor (3), then a connecting pipe (6) connecting said compressor (3) to an intake manifold (5) placed upstream of the engine (1), to convey supercharged air to said engine (1). The air intake circuit also comprises an air flow meter (26), a first air throttle (9), an engine intake gas intake throttle (30), a charged air cooler (32).

In the shown embodiment, the exhaust gas circuit makes the exhaust gases to exit the engine (1) via an exhaust manifold (12), which conveys the burnt gases to the turbine (4) of the turbocharger by means of a connecting pipe (11), the gas leaving the turbine (4) being directed towards a series of aftertreatment devices. In the shown embodiment, the exhaust gas circuit comprises a three-way catalyst (42a) associated with an upstream oxygen sensor (43a) and a downstream oxygen sensor (43b), a second depollution device (44) that can be for instance a gasoline particulate filter (GPF) and a third depollution device (45) that can be for instance an underfloor three-way catalyst. The exhaust line may comprise a pollutant concentration sensor (43c) such as a NOx sensor. A NOx sensor may be mandatory in some national or regional regulations. Then the exhaust gases exit the exhaust line at the end of the tail pipe as it is represented by the arrow at the bottom of figure 2.

In an embodiment, the first means configured to provide the air flow at the air intake circuit is an electronic control unit (ECU). Therefore, the processing unit of the measurement system is configured to receive from the electronic control unit (ECU) the air flow provided to the engine (1).

If the engine comprises an engine intake air mass flow (26), said air mass flow (26) is in communication with the electronic control unit (ECU) so that the air flow is determined using the measurements from the engine intake air mass flow (26).

In another embodiment (not depicted in Figure 2), the engine intake manifold (5) may be equipped with a pressure sensor and a temperature sensor. The air intake flow may then be determined by the electronic control unit (ECU) using a filling model applied to the air flow entering the engine based at least on the pressure and temperature in the engine intake manifold measured by such sensors, and on the engine speed, instead of being measured by the air flow meter (26).

In an embodiment, the second means configured to provide the fuel flow injected to the engine (1) is the electronic control unit (ECU), the processing unit of the measurement system being configured to receive from the electronic control unit (ECU) the fuel flow injected to the engine (1).

In an embodiment, the system may comprise an oxygen sensor (43a) in communication with the electronic control unit (ECU) so that the fuel flow is determined in the electronic control unit (ECU) using the measurements from the oxygen sensor (43a) and the fuel characteristics comprising the Oxygen/Carbon ratio in the fuel (OCCAR) and the Hydrogen/Carbon ratio in the fuel (HCCHR).

As it is known that fuels have a composition CxHyOz, with x, y and z being the fuel ratio according to the regulation, these values are used in the exhaust flow calculation.

In a preferred embodiment, that proved to be the most accurate, the processing unit is configured to calculate the exhaust gas flow from the intake air flow and the fuel flow according to the following formula: $\begin{matrix}Exhaust modal flow \left(l/s\right) \\ = MAF \left(ECU\right) \times \frac{1}{3.6} ⋅ \left(\frac{1 + \left[1/λ⋅\frac{2 ⋅ OCCAR - HCCAR}{4 ⋅ 4 , 764 ⋅ \left(1+\frac{HCCAR}{4}-\frac{OCCAR}{2}\right)}\right]}{Rho}\right)\end{matrix}$
MAF: Intake air flow from ECU (in Kg/h) => for instance measured by an air flow meter.
λ: richness => for instance measured by oxygen sensor (lambda sensor) 43a or tail pipe gas analyser (if available into test bench).
Rho=1.289 Kg/m3 (air density obtained at 273K).
OCCAR: Fuel Ratio Oxygen/Carbon (O/C) in the fuel (fuel characteristic).
HCCAR: Fuel Ratio Hydrogen/Carbon (H/C) in the fuel (fuel characteristic).

The second step of the method is to calculate the mass flow of at least a pollutant, for instance CO₂, from the exhaust gas flow and the measured concentration of the pollutant.

Thus, the third means configured for providing the concentration of the pollutant in the exhaust gas circuit is a pollutant concentration sensor located in the exhaust gas circuit.

For instance, regarding CO₂, the concentration can be measured by a concentration sensor located in the exhaust gas circuit on, for instance, the test bench. In the case of NO_{X}, the concentration can be measured by the NO_{X} sensor.

With the exhaust mass flow obtained in real time by the processing unit through, for instance, the previous formula, the emissions measured can be obtained using the formula below: MPOL (g/s) = POL density (g/l) * exhaust flow (l/s)* POL_concentration measured. Wherein
MPOL represents the mass flow of the pollutant,
POL density represents the density of the pollutant,
POL concentration measured represents the value of concentration issued by for instance the concentration sensor.

In case of pollutants NOx, NO₂ & NO₂, the formula can be as follows: MPOL (g/s) = POL density (g/l) * exhaust flow (l/s)* POL measured concentration * KH KH being the humidity compensation.

The present invention may be used both on a test bench and for open road testing.

POL concentration can be measured by an engine sensor installed and recorder "second by second" or with test bench analyzers. More than 30 different pollutants can be measure, being mandatories by regulation: CO, CO2, HC, NOx Particles, number & mass (P10 & 23), or not like N2O, Aldehydes, Ethanol, NH3 , H2O...

It is also an object of the invention an engine system comprising an exhaust gas pollutant measurement system according to any combination described before. The engine system comprises the engine (1), an air intake circuit and an exhaust gas circuit and an electronic control unit (ECU) for controlling the airflow intake and the fuel flow provided to the engine (1). The engine (1) being in fluidic communication with the air intake circuit and with the exhaust gas circuit and in communication with the electronic control unit (ECU).

## Claims

1. Engine exhaust gas pollutant measurement system, the engine (1) being in fluidic communication with an air intake circuit and with an exhaust gas circuit and in communication with an electronic control unit (ECU) for controlling the airflow intake and the fuel flow provided to the engine (1), the measurement system comprising:
- a processing unit,
- first means configured to provide the processing unit with the air flow at the air intake circuit,
- second means configured to provide the processing unit with the fuel flow injected into the engine (1), the processing unit being configured to receive the provided intake air flow from the first means and the provided fuel flow from the second means and being configured to calculate an exhaust gas flow from said provided intake air flow and said provided fuel flow,
- third means configured to provide the processing unit with the concentration of pollutants in the exhaust gas circuit, the processing unit being further configured to calculate the mass flow of pollutants from the calculated exhaust gas flow and the provided concentration of pollutants.

2. Engine exhaust gas pollutant measurement system, according to claim 1, wherein the first means configured to provide the air flow at the air intake circuit is the electronic control unit (ECU), the processing unit of the measurement system being configured to receive from the electronic control unit (ECU) the air flow provided to the engine (1).

3. Engine exhaust gas pollutant measurement system, according to any preceding claim, wherein the second means configured to provide the fuel flow injected into the engine (1) is the electronic control unit (ECU), the processing unit of the measurement system being configured to receive from the electronic control unit (ECU) the fuel flow injected into the engine (1).

4. Engine exhaust gas pollutant measurement system, according to claim 2, wherein it comprises an engine intake air mass flow (26) configured to be in communication with the electronic control unit (ECU) so that the air flow is determined using the measurement from the engine intake air mass flow (26).

5. Engine exhaust gas pollutant measurement system, according to claim 3, wherein it comprises an oxygen sensor (43a) configured to be in communication with the electronic control unit (ECU) so that the electronic control unit (ECU) is configured to calculate the fuel flow by the measurements from the oxygen sensor (43a) and from the fuel characteristics comprising the Oxygen/Carbon ratio in the fuel (OCCAR) and the Hydrogen/Carbon ratio in the fuel (HCCHR).

6. Engine exhaust gas pollutant measurement system, according to claim 5, wherein the processing unit is configured to calculate the exhaust gas flow from the intake air flow and the fuel flow according to the following formula: $\begin{matrix}Exhaust modal flow \left(l/s\right) \\ = MAF \left(ECU\right) \times \frac{1}{3.6} ⋅ \left(\frac{1 + \left[1/λ⋅\frac{2 ⋅ OCCAR - HCCAR}{4 ⋅ 4 , 764 ⋅ \left(1+\frac{HCCAR}{4}-\frac{OCCAR}{2}\right)}\right]}{Rho}\right)\end{matrix}$ where,
MAF: Intake air flow from ECU in Kg/h.
λ: richness of the fuel.
Rho=1.289 Kg/m³.
OCCAR: Fuel Ratio Oxygen/Carbon in the fuel.
HCCAR: Fuel Ratio Hydrogen/Carbon in the fuel.

7. Engine exhaust gas pollutant measurement system, according to any preceding claim, wherein the third means configured for providing the concentration of the pollutant in the exhaust gas circuit is a pollutant concentration sensor (43c) configured to be located in the exhaust gas circuit.

8. Engine exhaust gas pollutant measurement system, according to any preceding claim, wherein the processing unit is configured to calculate the mass flow of pollutants in the exhaust gas flow from the calculated exhaust gas flow and the provided concentration of pollutants according to the following formula: MPOL (g/s) = POL density (g/l) * exhaust flow (l/s)* POL measured concentration. Wherein
MPOL represents the mass flow of the pollutant,
POL density represents the density of the pollutant,
POL concentration measured represents the value of concentration of pollutants.

9. Engine exhaust gas pollutant measurement system, according to claim 8, wherein in case of pollutants NOx, NO₂ & NO₂, the formula is as follows: MPOL (g/s) = POL density (g/l) * exhaust flow (l/s)* POL measured concentration * KH, KH being the humidity compensation.

10. Engine exhaust gas pollutant measurement method, the engine (1) being in fluidic communication with an air intake circuit and with an exhaust gas circuit and in communication with an electronic control unit (ECU) for controlling the intake air flow and the fuel flow provided to the engine (1), the measurement method comprising the following steps:
- providing a processing unit with the air flow at the intake circuit by a first means,
- providing the processing unit with the fuel flow injected into the engine (1) by a second means,
- calculating in the processing unit the exhaust gas flow from said provided intake air flow and said provided fuel flow,
- providing the processing unit with the concentration of pollutants in the exhaust gas circuit by a third means,
- the processing unit being further configured to calculate the mass flow of pollutants from the calculated exhaust gas flow and the provided concentration of pollutants.
